# EUROPEAN PATENT APPLICATION

(11) **EP 2 086 019 A1**
(43) Date of publication of application: **05.08.2009**
(21) Application number: 08001974.8
(22) Date of filing: 02.02.2008
(51) Int. Cl.: H01L 31/042, H01L 31/048

(54) **Profiles for fixing rigid plates**

(71) Applicant: RENOLIT Belgium N.V., 9700 Oudenaarde (BE)
(72) Inventor: Rummens, Francois, 1082 Bruxelles (BE); de Ruyck, Luc, 9667 Horebeke (BE); Declercq, Mario, 9620 Zottegem (BE); Bossuyt, Jochen, 8581 Kerkhove (BE)
(74) Representative: Wagner, Jutta

(57) **Abstract**

The present invention relates to profiles for attaching rigid plates, especially photovoltaic modules, to a roof and to a method and system for attaching photovoltaic modules to a roof structure with thte help of profiles.

## Description

The present invention relates to profiles for attaching rigid plates, especially photovoltaic modules, to a roof and to a method and system for attaching photovoltaic modules to a roof structure.

### Background of the invention:

Roofs are an ideal place to install photovoltaic modules. Rigid Si photovoltaic modules are very well known but are difficult to handle (they are heavy) and require expensive heavy frames to install them on the roof.

To make a.o. a commercial roof watertight, it is well known to use a polymeric or a bituminous waterproofing membrane as a top layer of the roof (commercial buildings). In the case of a roof having on its top a waterproofing membrane , many penetrations of this membrane will generally be required to install the frames for the rigid Si photovoltaic modules. All these penetrations may lead to leakage and to cold bridges (leading to condensation inside the roof structure). Moreover not all roof structures are suited to carry heavy frames, which will catch the wind (sail effect). On a pitched roof this is also not aesthetical.

US 6,729,081 describes a light weight photovoltaic module which is self-adhesive and can in principle be glued onto the waterproofing membranes in a cost effective way and without the use of fasteners which perforate the waterproofing membrane and the insulation panels. Gluing operations are however quite delicate on the roof itself. The (self-) adhesive may be further not compatible with the existing waterproofing membrane. In the case of gluing of such modules (US 6,729,081) onto monomeric plasticized PVC sheets, the plasticizer will migrate into the glue (self-adhesive), resulting in loss of adhesion and brittleness of the PVC sheet. Gluing of such photovoltaic modules directly onto the waterproofing membrane will also block or at least much reduce the water vapor permeability of the waterproofing membrane, leading potentially to condensation problems inside the roof structure and/or to damages to the photovoltaic cells and/or to internal delamination of the encapsulating layers of the photovoltaic modules.

Another way to obtain a roof with flexible photovoltaic modules attached onto it is to use, as waterproofing membrane, a waterproofing membrane with factory laminated flexible light weight photovoltaic modules on top of it. Such waterproofing membranes are produced by companies like SIT (Solar Integrated) in the USA or by Alwitra in Germany. They consist of several elongated modules supplied e.g. by United Solar Ovonic (Uni-Solar modules) glued in parallel to the polymeric waterproofing membrane. The several Uni-Solar modules are connected in serial under the waterproofing membrane. The connections / soldering are protected (encapsulated) by cast polyamide or cast epoxy or cast polyurethane resin or by similar system. Such photovoltaic waterproofing membranes and systems are described e.g. in DE 29824045 U1 and WO2004066324 A2.

These photovoltaic waterproofing membranes suffer from several drawbacks:
- Risk of formation of creases during installation especially when the rolls have been stored at low temperature because of the differential internal tensions arising into the rolls between the several layers of the photovoltaic waterproofing membranes which wants to contract in a different way (the edges of the membrane are also not covered by a module and will deform differently than the parts covered with modules).
- Once installed, the modules are very easy to steal: one need only to cut into the plastic membrane around the module to steal the module which can further easily be wound up and put into boxes.
- Internal tension as a result of thermal cycli (sun - night) due to the poor matching of the coefficients of dilatation of the Uni-Solar modules (containing stainless steel foil) and of the polymeric films, sheets and glues. This may lead to premature delamination between sheets and photovoltaic modules, especially after degradation of the glues (e.g. hot melt PUR (Polyurethane)) by heat and humidity. Internal delamination inside the photovoltaic module itself may also happen (e.g. at the level of the PET dielectric film which is glued with PUR adhesive for the Uni-Solar PVL modules).
- The water vapor permeability trough the sheet is partly blocked (inter alia by the stainless steel foil inside the modules) resulting into:
   ○ Increased condensation into the insulation panels (loss of insulation and damage of the panels) during winter time and formation of high temperature vapor under the waterproofing membrane and photovoltaic modules in summer time (with risk of premature corrosion of the contacts, etc.).
   ○ Increased risk of delamination of the internal layers of the photovoltaic modules (hydrolysis of PUR glues, etc) due to the vapor forming at elevated temperature in summer time and which is trapped under the modules.
- The photovoltaic membrane is laid directly on the insulation panels which means a higher temperature of the photovoltaic module (compared to an installation on a not insulated substrate), with in principle loss of efficiency and certainly of durability of the modules as high temperature catalyzes the photo-oxidation of the polymeric films (EVA) used to encapsulate the modules. Further, the temperature inside the building will be increased resulting in more electricity consumption to maintain a cool temperature inside the building (more electricity consumption by the air conditioning installations). With a common insulation with a K coefficient of 0,5 (W/m² K), a dark membrane (like a photovoltaic membrane) absorbing during sunny hours around 700 W/m² will cause a heat flow inside the building of around 25 W/m². This heat flow has to be compared with an electricity production of typically 50 W/m².
- These membranes are difficult to install as the insulation panels have to be partly cut out (carved) to encompass the connection and cables.
- Difficulty to access the connections (which are under the welded membranes when installed, meaning that the membrane has to be cut).
- The choice of the insulation material is limited to such with high reaction to fire, because of the fire hazard linked to connections under the waterproofing membrane that dig into the insulation and because of the increased fire load due to the added photovoltaic modules (at least at the edges of the modules).
- Parts of the waterproofing membrane cannot be covered with photovoltaic modules (due to the water vapor permeability issue) and are therefore not protected from UV radiation and may fail before the photovoltaic modules (or the contrary), leading to not optimized use of materials.
- The photovoltaic modules attached on the usual waterproofing membranes described in the above mentioned patents need a metallic foil under or as support of the photovoltaic cells in order to:
   ○ Achieve high mechanical strength necessary to resist wind up-lift forces (heavy storms) and several mechanical stresses (hail, puncturing, ...) which may occur on a roof.
   ○ Have good external fire performances.
   Such modules are expensive.

These photovoltaic waterproofing membranes may also be installed on top of the existing waterproofing membrane, as a panel, by welding them on the existing waterproofing membrane. The access to the connections remains difficult in case they need to be tested or fixed (the welds have to be cut). Mechanical damages to the connections are further likely to occur as these connections are neither visible nor sufficiently protected and people may accidentally step on them.

When the waterproofing membrane needs to be removed or repaired, this type of installation is also not practical as the photovoltaic membrane (panel) can not be easily removed and reinstalled. One has indeed to cut it out (cut the welded parts of the membrane) to remove the panel from the roof. The welded edges of the panel are then lost which means that the connection to the roofing membrane is irreversible.

Water may also accumulate between the photovoltaic panel and the waterproofing membrane. This may lead to development of micro-organisms which will attack/damage the waterproofing membrane (especially P-PVC) and/or the module.

To achieve good fire performances and mechanical properties, the photovoltaic modules require a metal foil inner layer (the edges without inner layer are anyway burning easily). The previous art fails to provide light weight flexible photovoltaic modules without metal foil inner layer that allow to meet the required external fire performances and mechanical resistance for roof applications.

Thus, it is an object of the present invention to propose a safe (fire-, wind-, strain-safe) and practical system to attach photovoltaic modules on a roof without the drawbacks of the existing systems and to allow for the use of cost effective photovoltaic modules with adapted construction and composition able to achieve the required fire performances, mechanical resistance (wind, ...) and durability for roof applications.

Especially, the system shall preserve water vapor permeability of the roof and reduce the photovoltaic module temperature and exposition to humidity, extending its durability and avoiding exceeding the critical 85°C at the adhesive level even in the South of Europe. 85°C is a typical maximum working temperature for adhesives. It is especially the case of the EPR adhesive of the Uni-Solar modules Uni-Solar PVL 136.

The above mentioned objects are achieved by using profiles for fixing photovoltaic modules to a roofing structure and by a method of fixing comprising the steps of providing a rigid substrate to which photovoltaic modules are attached, providing profiles, fixing them on the roofing structure and attaching the modules to the profile. The problems are further solved by photovoltaic modules comprising a rigid substrate that are attachable to a roof with the help of profiles and a system for attaching these photovoltaic modules to a roofing membrane.

The method and system according to the invention improves the durability of the photovoltaic modules, the durability of the glues and connections, the durability of the roofing membranes and reduces the heating cost and/or electricity consumption for air conditioning.

The modules and method according to the invention will reduce the risk of proliferation of micro-organisms which may damage roofing membranes. It will limit the strain on the modules and connections:
- less strain by wind up-lift,
- less strain due to material shrinkage (loss of plasticizer)
- less strain due to material swelling (water take-up).
- less strain to the connections thanks to adequate protection of the connections
- less strain by dilatation

It will improve the durability of the installed roofing membrane.

It will allow to easily remove the modules with a suitable tool, while avoiding unwanted removal by thieves.

It will reduce the temperature rise inside the building.

It will reduce the fire hazard of the roof.

It may reduce cost and installation cost of the waterproofing membranes.

In a particular embodiment it will provide warm water (e.g. for a swimming pool).

BE20020000644 in the name of Alfatex describes the use of hook and loop fasteners (a.o. in the form of strips) to attach rigid and semi-rigid panels onto horizontal and vertical surfaces of buildings. The described method can be adapted for the attachment of the photovoltaic panels of this invention on the top of roofs.

The object of the present invention is solved in particular by attaching, preferably by gluing, typically inexpensive photovoltaic modules/cells, possibly with improved formulation and composition of their back sheet, on a rigid metal sheet or on a preferably glass reinforced plastic sheet (composite sheet). Then, these rigid metal sheets or these preferably glass reinforced plastic sheets are fastened on the roof to preferably soft profiles, said profiles being beforehand attached, preferably heat welded on the waterproofing membrane. The profiles have to be soft at least at their membrane facing side because otherwise temperature changes and other stresses could lead to damages of the membrane like creases or cracks.

The gluing operation of the photovoltaic modules/cells on a rigid metal sheet or a preferably glass reinforced plastic sheet occurs preferably during the encapsulation process (in the vacuum laminator) or during the production of the composite sheet e.g. by projection of the resin (unsaturated polyester or epoxy) with glass fibers on a mold comprising at its bottom the photovoltaic modules, the backside (possibly with adequate primer) of the photovoltaic modules looking towards the projected resin. The subsequent curing leads to the adhesion of the photovoltaic module to the composite molded sheet. Glues or adhesives are used to glue the photovoltaic modules on the rigid metal or glass reinforced plastic sheet. Such glues can be self-adhesive glues or strips, like Eternabond ® strips or like EPR adhesive Sika-Lastomer-R 68.

It is preferred to use cross-linked and/or thermal resistant adhesives (>= 85°C) like peroxide cross-linked EVA films (supplied e.g. by Etimex: Vistasolar 486.10 - useful formulations are described in WO 99/27588) or tie-layer films with high enough melting temperature (> 85°C) or PUR hot melt (e.g. QR 4663 from Henkel) or PVC-VAc or MS polymers (e.g. Fourny ETERNA 1051) or solvent based contact glue (Alkorplus 81040 nitril rubber glue with accelerator), etc. The surfaces to be glued may be treated with flame treatment or Corona treatment or plasma treatment in order to improve the quality of the bond. Between the substrate of the cell (e.g. a PEN or PET film) and the (preferably coated) metal sheet one can also use a plastic coextruded multi-layer adhesive film, preferably containing flame retardants.

Useful structures of adhesive films are "Tie-layer 1/TPO layer/Tie-layer 2". The Tie-layer 1 will be selected by the man skilled in the art to provide good adhesion to PEN (polyethylene naphthalate) or PET (polyethylene terephthalate) films or other films used as substrate of the cells, when pressed to the PEN or the PET or other film, e.g. in the vacuum laminator. The Tie-layer 2 will be selected by the man skilled in the art to provide good adhesion to the (coated) metal or rigid plastic sheet when pressed to the coated (metal) or rigid plastic sheet, e.g. in the vacuum laminator.

Useful resins to produce the tie-layers are:
- EAA (ethylene acrylic acid) polymers
- PO (polyolefins like PE or PP) grafted with maleic anhydride.
Primacor 1321 and Primacor 1410 are examples of EAA resins and are supplied by Dow Chemical. Compoline CO/LA and Compoline CO/LL - CO/UL are examples of PO grafted with maleic anhydride and are supplied by Auserpolimeri.

TPO stands for thermoplastic polyolefin and such layers are based on (blends of) PP/EPR reactor blends resins (like Hifax CA 10 supplied by Basell) or elastomers PP resins (like supplied by Dow under the trade name Versify 2400.01, in mixture with e.g. random PP copolymers) or VLDPE (like Exact 0201 or 8201 supplied by Dexplastomers) or copolymers (like EVA (ethylene vinyl acetate), EEA (ethylene ethyl acetate), EBA (ethylene butyl acetate), lonomers, etc.).

The plastic coextruded multi-layer adhesive film will usually be stabilized (with HALS and anti-oxidants, and possibly with UV absorbers as a reservoir for the transparent EVA adhesive layers) and will contain pigments and may be fire retarded preferably with halogenated flame retardants and Sb₂O₃. The film will contain a sufficient quantity of flame retardants to be able to limit efficiently the flame propagation as will be defined by tests and will depend on the thickness of the (EVA) transparent adhesive layer in the front sheet and on the thickness of the metal sheet (if used), able to extract the heat from the burning plastic layers.

According to the invention the modules are installed with the help of profiles. To this end, profiles are attached to the roof by one of welding, glueing and mechanical fixing means like nails, screws or hook and loop. The waterproofing membrane (and modules) are preferably sealed with the profiles. The profiles can take the form of singular molds, e.g. cup-shaped. Alternatively the profiles can take the form of strips with legs provided on the modules, e.g. as part of the rigid sheet.

Preferably, soft profiles or parts (e.g. in the form of a cup), generally with a rigid upper part or a rigid (e.g. metallic) insert, are welded/glued to a previously installed waterproofing membrane. The profiles are preferably equipped with flaps to ease welding, to improve sealing to the waterproofing membrane and to spread wind up-lift forces. The rigid, metal or preferably glass reinforced plastic sheet of the photovoltaic modules is attached (e.g. with stainless steel screws or with clips or with glues like MS (modified silicone) polymers) on the upper (rigid) part of the profile or to the insert (with screws drilling through the plastic profile) or to the top of the (plastic) part in the form of a cup. It will be recognized that these methods consisting of attaching the rigid metal or glass reinforced plastic sheets with the photovoltaic modules, to profiles or cups attached to the waterproofing membrane, do not require to perforate the waterproofing membrane.

Self drilling screws (corrosion resistant like stainless steel screws) are preferred and well known in the art. The screws (self-drilling or not) may also be long enough to attach the waterproofing membrane to the roof substrate. In this case the metal or rigid glass reinforced plastic sheets advantageously replace the pressure repartition plate of the classical mechanical fasteners. The welded profile should in this case be a "filled" (not hollow) profile to keep the roof watertight as the waterproofing membrane is in this particular embodiment, perforated.

Butyl sealing patches may be used to improve the waterproofing and the corrosion resistance of the connection (screws + metal sheet) between the metal sheet/rigid plastic sheet and the profiles/inserts/parts. The upper (rigid) part of the profile is, if necessary, designed to be compatible with these butyl patches. Thermo-resistant rigid PVC as upper part (for soft PVC base) is for instance adequate.

Preferably the profile has flaps at its bottom to allow for a sealing of the profile with the waterproofing membrane. The flaps can be of the same , a similar or some other material(s) than the profile. The flaps are preferably made from a material compatible with the material of the waterproofing membrane, i.e. weldable thereto. They are in one preferred variant made from the same or a similar material and more preferred integrally with the profile. They can also be made from a different material, e.g. when the material of the profile differs from that of the waterproofing membrane. The flaps may be sealed to the membrane by welding or glueing, preferably they can be sealed by welding.

The flaps can also serve the purpose of attaching the profile to the waterproofing membrane and/or the roof. In one variant they preferably carry a hook and loop fastener. The second, corresponding part of the hook and loop fastener is attached to the waterproofing membrane or the roof and the profile attached by pressing both parts of the fastener onto each other. The profile can take the from of a strip in this variant. In another preferred variant the flaps are weldable to the membrane. With the help of flaps one can also attach a e.g. PVC profile to a e.g. bituminous waterproofing membrane. The flaps are made from a material weldable to the membrane and are attached and/or sealed to the profile. The profile can then be welded to the mebrane with the help of the flaps.

The upper part of the profile may be discontinuous/interrupted (extrusion flow periodically interrupted for the upper part or upper part of the profile periodically cut out) to be more cost effective, more flexible (with less stress by dilatation and allowing for attachment to curved roofs) and to ease the introduction of a metallic insert. Such profiles may be produced as follow: During the extrusion process of the profile, the flow of the part of the profile above the flaps part may be interrupted or the part of the profile above the flaps part may be periodically cut out (e.g. by a moving knife system after the die) and the scraps recycled. The rigid part of the profile is interrupted every length of less than 1 m, typically of less than 50 cm. The interruption of the upper part of the profile should match the size (width) of the rigid sheets to be fastened onto the profile. In case of use of hollow profiles with inserts, the use of "interrupted profiles" will additionally help to introduce the insert into the profile. If the profile has a rigid top part, the interruption will additionally solve the problem of dilatation of the rigid top part (with the related stresses). The interruption can be foreseen for the whole height of the profile in the case of profiles with flaps, so that the profile is reduced to a strip between the fixing areas. The interruption can also relate to part of the profile height. The remaining height of the profile can advantageously be utilized during fixing the profile to a roofing structure since a welding machine can be constructed to be guided by the remaining height of the profile.

The rigid metal or preferably glass reinforced plastic sheet may alternatively or additionally be equipped with legs or flaps. In a first variant these legs or flaps may be welded or glued to the waterproofing membrane. In a second variant, these legs or flaps are equipped with a hook (or loop) part of a hook and loop fastener. The corresponding loop part (or hook) is welded on the roofing sheet. The profile can take the from of a strip in the case of legs attached to the module. The rigid metal or glass reinforced plastic sheet with legs or flaps is installed on the roof and the hook (or loop) is pressed into the loop (or hook) welded on the roofing sheet.

The photovoltaic modules which are useful for this invention may consist of any type of photovoltaic cells and contain, between the metallic back-electrode and the transparent front-electrode, as active material (junctions) e.g.:
- a-Si,
- tandem cell (a-Si, a-Si or a-Si, microcrystalline silicon, ...),
- triple junction a-Si/a-SiGe/a-SiGe,
- Organic PhotoVoltaic (OPV),
- CIGS,
- Cadmium Telluride thin films

The cells are e.g. built or transferred on a metallic foil (stainless steel, copper, ...) or a plastic film (PET, PEN, Polyimide, ...) with the right texture, as known per se. This foil or film is here called the substrate of the cell.

For achieving low-cost mass production, the cells are usually built on plastic films and serial connected in strips of around 5 to 25 mm, like e.g. described in WO 98/13882 (for example by lift-up, laser, etching and silk printing of Ag paste processes, ...).These types of cells and serial connections, while being cost effective, withstand only little strain and will be sensitive to storms and to usual stresses during e.g. works on the roof, etc. especially if the photovoltaic modules are built (encapsulated) only with plastic films or foils (low rigidity compared to metal) and installed according to the previous art (DE 29824045 U1 and WO2004066324 A2) and/or on relatively soft insulation panels.

The cells may also be built on stainless steel foil, typically 40 cm wide and 120 µm thick. The typically 120 µm foil is cut in rectangles of typically 40 cm * 30 cm and connected in serial with metal strips and encapsulated to obtain a photovoltaic module. Such modules are less sensitive to strain. They are available from Uni-Solar (United Solar Ovonic). The production process is more expensive and needs by-pass diodes to function properly (shadow effect). It may bring higher lightning risk and electrical break-down risk.
A dielectric film (PET, PA ...) is required.

Since the present invention aims to provide cost effective and safe photovoltaic roof solutions, the photovoltaic modules should preferably but not mandatory contain cost effective cells.

Typically the photovoltaic modules attached to the rigid metal or preferably glass fiber reinforced plastic sheet according to this invention have from the top (sky face) to the bottom (roof face) the following composition (connections not described):
a) A transparent front sheet preferably of fluoropolymer (typically 50 to 200 µm of ETFE, FEP, PVDF/acrylic ..., containing required stabilizer and preferably long lasting UV absorbers) generally surface treated to improve adhesion of layer b)
b) A transparent adhesive layer (EVA, ionomers, etc.; total thickness 100 to 1500 µm) or layers which are flexible and impact resistant but usually have poor fire resistance.
c) A plastic or metallic film/foil which carries the active layers (TCO - photovoltaic junction - back electrode) on top of it, if relevant, with serial connections.
d) A back layer comprising:
   - an adhesive layer or coextruded layers (tie-layer/TPO/tie-layer), preferably opaque and if required flame retarded, to provide adhesion of the plastic or metallic cell substrate (c) to the lower metal or rigid plastic sheet (back sheet). The flame retardant is preferably on base of halogen flame retardants (e.g. Saytex 8010 ®) with Sb₂O₃, acting in the gas phase (flame retardants releasing substances which "poison" the combustion in the gas phase). Adhesive layers or tie layers may be EVA films or hot-melts, tie layers on base of polyolefin copolymers with acrylic acid or grafted with maleic anhydride, epoxy glues, PUR glues, etc, and will be chosen by the man skilled in the art to obtain good adhesion between the cell substrate film and the coated metal sheet or rigid plastic sheet.
   - Optionally a dielectric film may be included.
e) A lower metal foil (Aluminum, Epoxy coated steel, ...) or rigid plastic sheet (glass reinforced PP, Polyester, Epoxy, ...).

The encapsulating layers are wider and longer than the cells, to reduce oxygen and water ingress to the cells along the edges. Sealing beads may be further used.

Alternatively, the photovoltaic modules according to this invention may also have from the top (sky face) to the bottom (roof face) the following composition (connections not described):
a) A transparent, typically 4 mm thick, tempered glass
b) A transparent adhesive layer (EVA, ionomers, ...; total thickness 200 to 1500 µm) or layers which are flexible and impact resistant.
c) Rigid Silicium cells (typically 300 µm thick) or a plastic or metallic foil which carries the active layers (TCO - photovoltaic junction - back electrode) on top of it.
d) A back layer comprising:
   - An adhesive layer or coextruded layers (tie-layer/TPO/tie-layer) preferably opaque and flame retarded, to provide adhesion of the silicium or plastic or metallic cell substrate (c) to the lower metal or rigid plastic sheet (back sheet).
   - Optionally a dielectric film may be included.
e) A lower metal (Aluminum, Epoxy coated steel, ...) or glass (with frame) or rigid plastic sheet (glass reinforced PP, Polyester, Epoxy, ...) or a metal frame with classical backsheet (Tedlar/aluminium/PET, etc....) preferably with flaps.

Layers a), b) and c) may also be instead thin film photovoltaic cells deposited on glass, like a-Si cells.

The encapsulating layers are wider and longer than the cells, to reduce oxygen and water ingress to the cells along the edges. Sealing beads may be further used to obtain a maximal protection against humidity and oxygen allowing the use of oxygen and moisture sensitive cells..

The lamination on the rigid (coated) metal or glass reinforced plastic sheet may be done according to any known suitable method and with appropriate adhesives, but preferably during the vacuum lamination/encapsulation process of the cells. The metal or glass reinforced plastic sheet may be already laminated/coated/coextruded with a tie-layer film or a tie-layer/TPO/tie-layer sheet, preferably embossed to facilitate elimination of air during encapsulation in the vacuum laminator.

Alternatively, glass reinforced resin (e.g. unsaturated PE or Epoxy) may be projected in a mold, the photovoltaic modules (layers a) to d)) being at the bottom of the mold, the transparent front sheet looking to the ground.

More details about light weight flexible photovoltaic cells and modules (and the process of laminating them in e.g. a vacuum laminator) can be found in numerous patents and patent applications like EP 0769 818 A2, WO 2006/089044, WO 98/13882, and in the patents from the following companies:
- Konarka (Organic photovoltaic and Graetzel cells and modules).
- VHF - Flexcell (a-Si:H cells and modules)
- Helianthos/AKZO NOBEL (a-Si:H cells and modules)
- Powerfilm (lowa Thin Film) (a-Si:H cells and modules)
- Canon, (a-Si:H cells and modules)
- Fugi, (a-Si:H cells and modules)
- United Solar Ovonic, (a-Si:H and triple junction cells and modules)

According to the previous art (with a front sheet being a polymeric film), the (plurality of) EVA layer(s) of the front sheet should contain glass fibers (see for instance EP 0769 818 A2) and/or glass beads and/or glass flakes to improve:
- the mechanical properties (scratch resistance)
- the UV aging (glass fibers etc. absorb the energetic UV light)

The thickness of the EVA layer should be lower than 0,8 mm to avoid a too high flammability. This limitation is not favorable for the mechanical properties.

The metal foil as substrate for the cell is required to limit fire penetration and propagation. However, this foil is not present at the edges of the modules, which may be a fire safety issue if the module catches fire at its edges.

It is one of the objects of this invention to replace the metallic foil as substrate of the cell with a plastic film (meaning inter alia cheaper and thus more cost effective cells and serial connections; insulating substrate), while keeping fire safety (even when the front sheet is polymeric) and mechanical endurance.

The previous art (EP 0 769 818 A2) indicates that when the thickness of the organic polymer above the metallic substrate of the cell is beyond 800 µm, sufficient inflammability cannot be attained. It has been surprisingly discovered that a (nearly) all plastic photovoltaic module attached to a rigid metal sheet can have sufficient inflammability even when the thickness of the organic polymer layers above the metal sheet is beyond 800 µm and even beyond 1200 µm. This is more particularly the case when the metal sheet is installed according to this invention, i.e. in a non insulated way. When photovoltaic cells, encapsulated with organic films, are laminated on a rigid metal sheet, the fire propagation at the surface of the module is much reduced a.o. because of the heat conduction of the metal plate which acts as a heat sink, especially when the metal sheet is installed according to this invention on profiles (in a not insulated way). No glass components are required in the transparent adhesive layer to improve the mechanical properties (scratch resistance, ...), because the transparent adhesive layer can be sufficiently thick (typically 1000 µm).

It has been further surprisingly discovered that the addition of halogenated, preferably brominated flame retardants in the adhesive layer under the plastic cell substrate (back layer), can significantly improve the reaction to fire of the modules: When providing a back layer containing e.g. sheets or films which are flame retarded by halogenated, preferably brominated flame retardants, and when these sheets or films have low tendency to charring, the flame retardant decomposition products are effectively released into the flame in case of fire to poison fire propagation. The sheets or films are preferably based on TPO and/or polyethylene resins with adequate comonomers (vinyl acetate, acrylate, neutralized acrylic acid, acrylic acid, grafted maleic anhydride, ...). Such resins are known for their low charring tendency. Avoiding incorporation of glass fleeces into the transparent EVA adhesive layer has several advantages, like reduced material and processing costs and lower risk of water infiltration towards the photovoltaic cell (along the glass fibers).

Compensation for the loss of the UV absorption effect of the glass fibers may be provided by a coated layer between the transparent front sheet and the transparent EVA adhesive layer. Said coated layer is designed to show good adhesion on layer a) and b), which may beforehand be surface treated to improve adhesion, and contains UV absorbing nano-particles (compensation of adhesion promoters may be required). For instance, the lower side of the fluoropolymer layer a) may be coated at adequate temperature with a solution (e.g. in MEK/THF) of the EVA adhesive film b) (e.g. Vistasolar 486.10) containing added ZnO nano-particles (with adequate dopants and/of coating like SiO2 coating to reduce the photocatalytic activity of such nanoparticles). Adequate nano-ZnO particles are commercially available e.g. by Evonik Degussa and have a mean particle size of around 35 nm (determined by Electronic Microscopy). Other polymers than EVA may be used like PVDF or mixture of PVDF with acrylic resins. Other nano-particles may be used.

Preferably, the nano-ZnO is dispersed in a solvent (e.g. in MEK/THF) according to the teaching of DE10304849 (pearl bead mixer for small molecules silane modification of the nanoZnO; used silane = acetoxypropyltrimethoxysilane). The nano-ZnO may also be grafted with vinylsilane (according to DE10304849) before grafted polymerization of ethylene and vinyl acetate on the ZnO.

The thickness of the coating is typically 3 to 4 µm dry. The concentration of nano-particles should be around 25 % w/w of the resin. The coating absorbs more than 30 % of the UV light up to 370 nm and doesn't reduce significantly the photovoltaic module efficiency. The aging of the modules of this invention according to ISO 4892-2 shows an improvement of the evolution of the aspect (time to yellowing of EVA - Delta E > 5) of at least 20 % compared to the same modules without the nano-particles containing coating.

If required by the level of desired fire performances, the adhesive and films (EVA, TPO, ...) of the back layer are preferably formulated with halogenated compounds and catalyst (Sb₂O₃) and should have a thickness of more than 0,2 mm, preferably more than 0,5 mm and contain at least 50 g/m², preferably at least 100 g/m² halogenated flame retardant, in order to be able to release enough halogene radicals into the flame (to "poison" the flame propagation) when the module catches fire.

Metal sheets suitable for this invention may be typically:
- 0,5 to 2 mm single sheet metal profile, as made from Al55/Zn45 type coated steel (Aluzinc, Galvalume, Galval, Zincalume), AZ185 with e.g. epoxy coating
- 0,5 to 2 mm coated Aluminium sheets
The metal sheet may be partly corrugated to improve its flexural rigidity. Coatings to improve the adhesion of the metal sheets with polymeric films may be PVC-Vac, PUR, Epoxy, Acrylic, etc. based coatings.

Rigid glass reinforced plastic sheets may be:
- Glass reinforced flame retarded PP, preferably corona treated and/or with a primer (e.g. chlorinated polyolefin),
- Flame retarded epoxy or unsaturated polyester glass fiber composites

The color of the sheets is preferably white (IR reflecting) except if the sheet is used to heat water. In the latter case the sheet is preferably dark coloured.

Adequate glue for adhesion of the rigid metal or plastic sheet to the photovoltaic module (= layers a) to d)) is easily selected by the man skilled in the art. Acrylic/epoxy adhesives may be used to pre-coat the metal sheets.

The waterproofing membranes and composition of profiles used for this invention (as back sheet for the modules or as strips) are known per se. Conventional sheets and compositions for sheets and profiles are useful and may consist of any material which is suitable for roofs. The material must be resistant to weathering and in particular to UV light, be watertight and resistant to temperature variations.

Common materials are soft (modified) polyolefins (polyethylene, chlorinated polyethylene, polypropylene, ethylene propylene rubber, copolymers of ethylene and vinyl acetate and their mixtures, etc.), EPDM (ethylene propylene diene monomer), PIB (polyisobutylene), ECB (ethylene copolymer bitumen), plasticized PVC (phthalate plasticizer, polyadipates plasticizers, Elvaloy ® types resin, PVC-grafted on EVA or polyacrylate, etc.), bitumen, and blends of two or more of these.

The sheets are commonly reinforced with polyester scrim (typically 3 * 3, 1100 dTex) and/or glass fleece (typically 50 g/m²) and may have a polyester backing to attach the sheet to the insulation panels. The sheets are preferably also fire resistant, either as a property of the material used or by addition of suitable fire retardants. The sheets further contain pigments and possibly UV light and thermal stabilizers and may be coated by protective varnishes or barrier coatings (against plasticizer migration ...).

The profiles have similar composition as the waterproofing membranes. They may have an upper part which is more rigid. For instance, if the base part is soft PVC (plasticized PVC (P-PVC)), the rigid part may be rigid U-PVC (with additives to increase its softening temperature and fibers to increase the pull-out value of the screws). On TPO profiles (e.g. based on Hifax CA 10 A), a glass reinforced PP (impact modified) may be used. Screws will be fastened in this upper part.

Expancel ® from AKZO or other well known blowing agents may be used to produce a foam core for the profiles, if desired. E.g. PUR foam and/or mechanicals means may also be used in the field to seal the profiles.

Therefore, and as example, if the waterproofing membrane is a P-PVC waterproofing membrane, the profile will be based on P-PVC with possibly a coextruded upper layer of rigid PVC (glass reinforced, ...) optimized to increase the pull-out value of the screws.

Hooks and loops are described in several patents (BE 20020000644, US 3,147,528, US 4,794,028 , WO 99/65662) and supplied by several companies (Velcro, Alfatex). Loops may be fleeces like "Libeltex 11-217-200 g/m²". A hook with excellent peeling value in combination with this fleece is the "Mushroom Gripfix XI" from company Alfatex. Libeltex 11-217-200 g/m² fleece and hook mushroom Gripfix XI provided by Alfatex provide typical peeling forces between 50 and 100 N/5cm (tensile test at 100 mm/minute, 5 cm width strips).

The invention also provides a very economical way to produce warm water (+/- 50°C). If the rigid metal (or glass reinforced plastic sheet) with fillers to increase heat transfer) is mounted on profiles or legs on an insulated roof, the place between the waterproofing membrane and the metal sheet (or plastic sheet) is ideal to install plastic pouches or profiles filled with water or another suitable heat transfer liquid to function as thermal solar collectors. The dark metal sheet will transfer the heat of the sun and the heat of the photovoltaic modules to the water inside the pouch or multi-wall sheet. The metal sheet is preferably black and with low emissivity coating. The modules on the metal sheet may also have a front sheet with low emissivity. The efficiency of the photovoltaic modules will be improved (lower operating temperature).

Compared to the previous art, the invention offers the following advantages:
- Improved reaction to fire when the modules are attached on a metal sheet and therefore completely separated from the waterproofing membrane by this metallic fire barrier sheet, which further works as a heat sink and therefore greatly limits fire propagation.
- Possibility to achieve outstanding reaction to fire when layers d) contain enough halogenated flame retardant, allowing for the use of a thick protective transparent EVA adhesive layer b)
- No folds or creases into the module during installation.
- Low strain of the cells and interconnections during storms and other mechanical stresses
- The modules are difficult to steal as the modules can mechanically be fastened with special screws (anti-theft screws)
- There is ventilation under the module and therefore:
   - The temperature of the module in use is lower which means in principle a higher electricity production and certainly a higher durability.
   - Lower temperature of the waterproofing (WP) membrane which means lower need of electricity for air conditioning and better aging of the waterproofing membrane (protected part)
- The ventilation under the module can easily be closed to achieve when desired annealing of a-Si modules.
- Less risk that the modules will get submerged by water (3 cm above the WP membrane)
- Low risk of condensation and formation of vapor at elevated temperature under the modules (less corrosion of the contacts and less damage to the cells by elevated temperature vapor) due to the ventilation
- better encapsulation (protection against moisture and oxygen) of the cells (e.g. by metal and glass)
- No risk of formation of creases in use (high dimensional stability of the metal sheet and separation from the waterproofing membrane and moving insulation panels) and reduced risk of delamination between substrate and module or inside the modules (better aging resistance of the adhesive between metal sheet and module as no water vapor at high pressure may damage the adhesive)
- Higher durability of the photovoltaic modules as the surface temperature of the modules is reduced
- Possibility to fully cover (protect) large sections of the plastic roof with the photovoltaic module panels of this invention while keeping (enough) water vapor permeability
- Possibly lower cost of installation of the waterproofing membrane as the rigid metal or glass reinforced plastic sheet (with long screws or mechanical fasteners) may be used to attach the waterproofing membrane (perforated) to the roof surface in a rigid way
- Lower risk to reach module and adhesive temperature in excess of 85°C, which is the critical temperature for self-adhesive glues and for many useful glues/adhesive films.
- Ease of installation and of control/replacement of cables and electrical connections
- Ease of installation of protective elements for cables, etc (it is possible to perforate with screws the rigid metal or plastic sheet, without perforation of the waterproofing membrane)
- Protection against weathering of cables and electrical connections (they may be attached under the photovoltaic panels)
- No development of micro-organisms (plasticizer extraction) thanks to the ventilation of the space between the waterproofing membrane and the modules
- No perforation of the roof required
- The profiles, at the roofing sheet side, are soft so no cracks will form due to dilatation of the profiles in the waterproofing membrane
- In case of a full plastic module, the lightning risk is reduced
- The building is kept cooler (less electricity consumption for air conditioning)
- Possibility to use the space between the metallic base of the modules, the profiles and the insulated waterproofing membrane to install thermal solar water heating systems.
- Possibility to attach all the modules together with anti-theft screws: theft of modules becomes very difficult.
- Possibility to install curved metallic profiles along the edges of the area of the roof covered by modules: limitation of lightning risk and of theft.

The photovoltaic system remains light weight (< 15 kg/m²) compared to crystalline silicon modules with their frames.

The invention will be illustrated further by reference to the attached drawings which are not meant to restrict the scope to the specific embodiments shown. Other combinations of the preferred features than those shown are also possible and advantageous. The drawings are showing:
Figure 1a a cross section through modules fixed according to the invention
Figure 1b a cross section through modules with thermal solar elements
Figure 2a a cross section rthrough a profile
Figure 2b a cross section through a profile fixed to a roofing structure
Figure 2c a cross section through a screw for fixing the profiles
Figure 2d a cross section through another screw for fixing the profiles
Figure 2e a cross section of a profile with clip for fixing the module
Figure 2f a cross section through a weldable hollow profile
Figure 2g a schematic view of the welding of a profile to a roofing sheet
Figure 2h an enlarged section of the welding equipment
Figure 2i a schematic view of a device for welding two profiles in parallel
Figure 3a a cross section through modules mounted slantedly
Figure 3b an enlarged view of the modules of figure 3a
Figure 4 an enlarged cross section of a sealing of a module.
Figure 5 a drawing of a wind up-lift test.

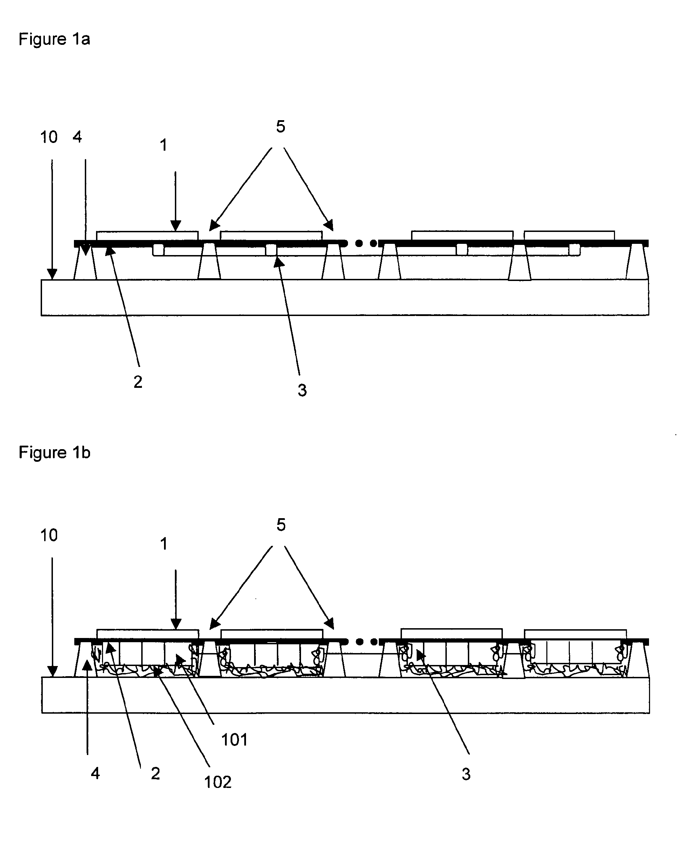

Figure 1a shows 2 * 2 photovoltaic modules 1 laminated on a rigid sheet 2. The modules may be of the well known type "Uni-Solar PVL 136" from Uni-Solar. Cheaper modules 1 may be used and e.g. directly laminated on the rigid sheet 2 during the vacuum lamination encapsulation process. The stack of layers, from top to bottom, can be:
A) ETFE or FEP (5 to 200 µm) from DuPont,
B) EVA Vistasolar 486.10 from company Etimex (200 to 1500 µm),
C) Cell on PEN or PET or polyimide (50 µm),
D) EVA, possibly flame retarded or EEA (Primacor type), possibly flame retarded or PO with grafted maleic anhydride, possibly flame retarded, ... (20 to 200 µm)
E) TPO (Plastomer Exact 0201 or Hifax CA 10 A, etc.), possibly flame retarded (200 to 1500 µm)
F) An adhesive (copolymer with maleic anhydride, acrylic acid, hot melt PUR, etc), possibly flame retarded,
G) 0,5 to 3 mm metal sheet (e.g. epoxy coated) - (2) on the picture, possibly partly corrugated.

The layers A) to F) are designated 1 in figure 1a, layer G) is designated 2 in figure 1 a. The layers D) to F) may be coextruded. The connections 3 (contacts/solders and electrical wires, ...) may, as shown, be done and run under the modules 1 (the rigid sheet 2 is cut through to make the solders with the wires, and to encapsulate them with state of the art resins like PA (e.g. PA from Henkel, Macromelt 6240), PUR, Epoxy, etc.). The connections and wiring 3 are protected from the sun and rain.

The waterproofing membrane 10 is generally mechanically attached (not shown) to the roof structure with mechanical fasteners in the overlap between waterproofing membranes. The profiles 4 are attached, preferably welded on the waterproofing membrane. The profiles may also be glued for instance with MS polymers, etc.

The rigid sheet 2 is attached on profiles 4 or on thermoformed parts ("thick disks" in the form of a cup), e.g. with anti-theft screws. Such profiles or "cups" are welded on the waterproofing membrane 10. Module free zones 5 or at least cell free zones, typically 2 to 6 cm, are foreseen for attaching by screws. The profiles 4 may be perpendicular or as shown parallel to the rigid sheet 2. A typical size for the rigid sheet 2 (aluminum, ...) is 1 * 6 m². The waterproofing membrane is not perforated. If desired, the open edges may be closed with curved profiles (to improve wind up-lift resistance, lightning safety, protection against theft, etc).

Figure 1b shows the same photovoltaic module 1 as figure 1a with thermal solar elements 101 under the metal sheet 2. The thermal solar elements 101 may be 2-walls sheet (in metal or in polymer) welded or glued or pressed to the metal sheet 2 to assure good heat exchange. A mesh structure 102 is foreseen to support the solar thermal elements 101 and to further insulate them along the profiles 4.

In a very cost effective version, the thermal solar elements 101 may be plastic pouches (TPO like Hifax CA 10 A, with anti-oxidants, metal desactivators, light stabilizers, pigments and fillers including fillers to increase heat exchange like metallic fillers), with typically sizes of 40 cm width and 18 m length. The pouches are installed between the profiles 4 on a fleece 102 as separation layer. 18 m corresponds e.g. to 3 times the length of the metal sheets 2. The metals sheets 2 are installed afterwards on the profiles 4 (with screws) and cover the pouches 101.

Deflectors may be foreseen inside the pouches 101 to increase convection and heat exchange. Under adequate moderate water pressure (typically less than 0,05 bar), the pouches 101 will enter in contact with the installed metal sheet 2. The pouches 101 are connected together on the roof (connection not shown) by plastic pipes and to the pump which is used for water circulation (swimming pool pump, heat pump, etc). The system allows to reduce heating cost. At least the upper face of the pouch 101 may contain fillers like metallic fillers or carbon black which are known to increase thermal heat conduction of plastic sheets. The pouch 101 may be reinforced with polyester scrims or metallic meshes.

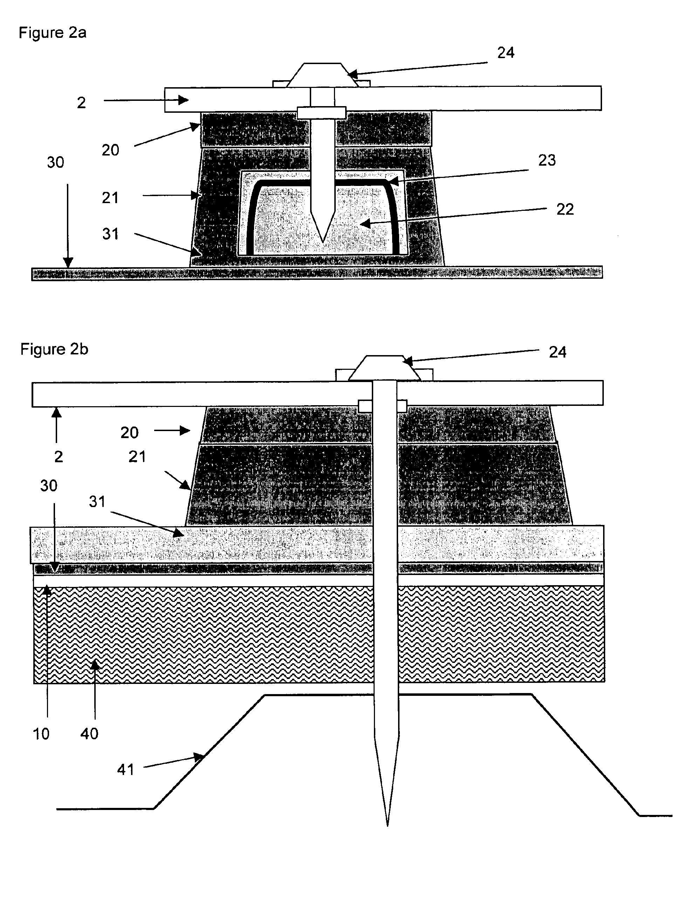

Figure 2a shows a cross-section of a profile 4 which may be used for this invention. The profiles consists of several regions, namely a massive bottom layer 31, a hollow or foam filled body part 21 and a massive upper layer 20. There are further flaps 30 which have the same or a similar composition as the waterproofing membrane (not shown in figure 2a) in order to obtain good welds. The flaps 30 are typically 2 to 6 cm wide with a thickness of typically 2 mm. The flaps 30 are properly welded to the waterproofing membrane to assure good wind up-lift performances and, if desired, to obtain a waterproof connection. Preferably the flaps can be an inegral part of the profile 4.

The profiles/flaps/cups may be welded to the waterproofing membrane 10 on the roof or in the factory, possibly during the extrusion/production process.

The upper layer of the profile 20 may be rigid and has a thickness of 0 to typically 1 cm. The profile 4 may alternatively be hollow and contain a metallic insert 23 to assure good pull-out values for the screws 24 which attach the rigid sheet 2 on the profiles 4 and to help welding the profiles 4 on a straight line. Generally, the profile 4 may be hollow or full or may contain a foamed core 22. The last two solutions have the advantage that if a screw (mechanical fastener 24) perforates the profile 4 and the waterproofing membrane, the system remains waterproof (provided butyl strips are used to seal the fastener). The profile 4 may then be used to mechanically attach the waterproofing membrane. The metal or rigid plastic sheet 2 ensures the rigidity to the connection with the substrate of the roof.

When fully covered by modules installed according to this invention, the waterproofing membrane needs no reinforcement with polyester and/or glass fleece as will be recognized by the man skilled in the art. The width of the sheet may be higher like 2 m or more) than the usual 1 to 1,6 m. The height of the profile is typically from 2 to 5 cm.

Figure 2b shows the profile 4 of figure 2a along its length. The profile 4 is extruded with an interrupted flow of parts 20 and 21. The typically 1 cm high bottom layer 31 is kept to guide the welding machine as explained later. The interrupted flow allows for material cost saving where no mechanical strength is required. The profiles 4 may also be cut-out instead to achieve the same result. Further, the rigid part 20 having a limited length will not lead to dilatation tensions and the profiles 4 may be wound up. A self-drilling fastener - screw 24 attaches the rigid sheet 2 to the roof structure 41 and penetrates the rigid upper part of the profile 20, the optionally filled soft part 21, the waterproofed welded flaps 31, the waterproofing membrane 10 and an insulation panel 40. The screw 24 has sealing rings (patches) to waterproof the connection and limit the corrosion. As the waterproofing membrane is perforated, this system is preferred for pitched roofs.

Because of the required overlap of waterproofing membrane typically 5 cm is lost in the prior art systems that are needed to accommodate the metallic plate of the fastener. The metallic plate is required to spread the wind up-lift forces. With the system of this invention the 5 cm lost overlap is not necessary anymore. The metallic plates and screws are also not necessary anymore. The waterproofing membranes may be wider.

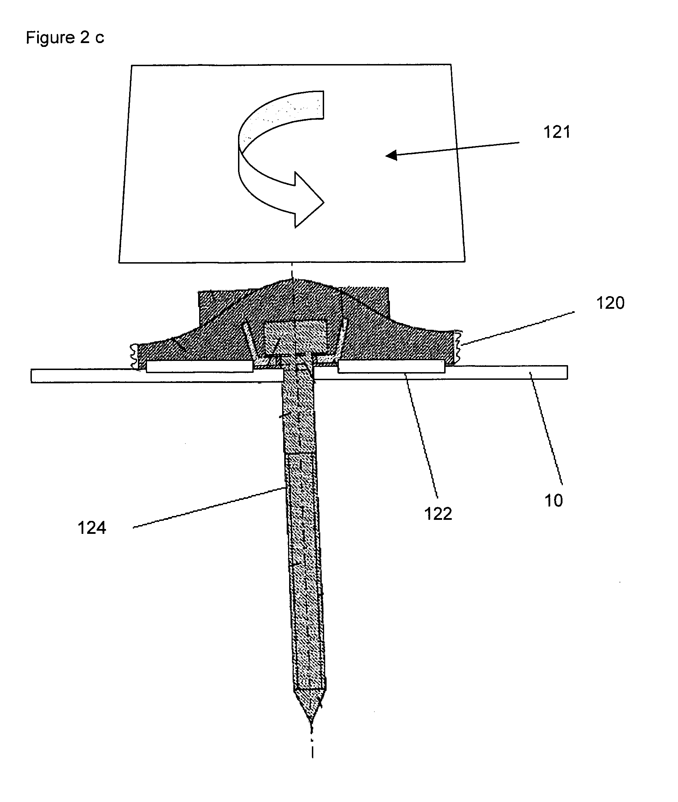

Figure 2c shows a mechanical fastener 124 as described in FR 97 13821. Fasteners supplied by the German company BST are also suitable. The fasteners 124 perforate the waterproofing membrane 10. The hood of the fastener is welded to the waterproofing membrane 10 with a liquid p-PVC paste or seam sealer 122. Such fasteners can be used in combination with the cups/profiles of this invention to fasten the waterproofing membrane: The fasteners fasten the waterproofing membrane to the roof structure and the profiles are used to attach the rigid sheets 2 with the modules 1. The fastener may be adapted with a thread 120 in order to be able to attach (screw) a (plastic) part 121, in the form of a cup to the top of the fastener. On the cup 121, one will attach (with screws) the metal or rigid plastic sheets 2. The cup 121 may consist of plastic (Rigid modified heat resistant PVC, ...) or metal (aluminum, etc)

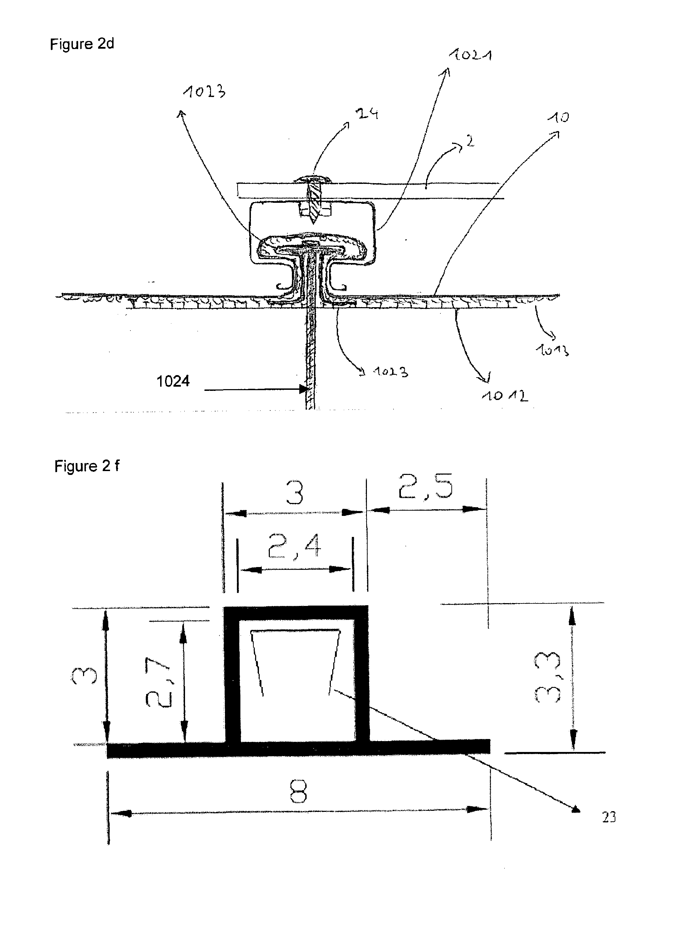

Figure 2d shows a further variant of fixing the modules 1 or more specifically their rigid substrate 2. In this case a hook fleece 1012 (e.g. a "mushroom" fleece as Gripfix XI supplied by Alfatex) with the hooks looking to the sky is provided. The hook fleece 1012 is attached to the roof structure with a metal profile 1023 and screws 1024. A waterproofing membrane 10 is laminated at its roof looking side with a loop fleece 1013 and is pressed on the hook fleece 1012. It follows the profile 1023. In this variant the waterproofing membrane 10 is advantageously not perforated by any screw (neither 1024 nor 24). As examples for the loop fleece one can use a Velcro Loop 3001 or a fleece like "Libeltex 11-217-200 g/m²" from Libeltex. The loop fleece 1013 is laminated to the waterproofing membrane 10 e.g. with pressure and heat or with the use of adhesives The loop fleece 1013 can also be coated with plastisol and fused. A metal clip 1021 is clipped on the profile 1023 and the waterproofing membrane 10. The metal sheet 2 is e.g. screwed or attached with nuts and bolts 24 on the clip 1021. Two metal sheets 2 may be screwed in overlapping on the clip 1021.

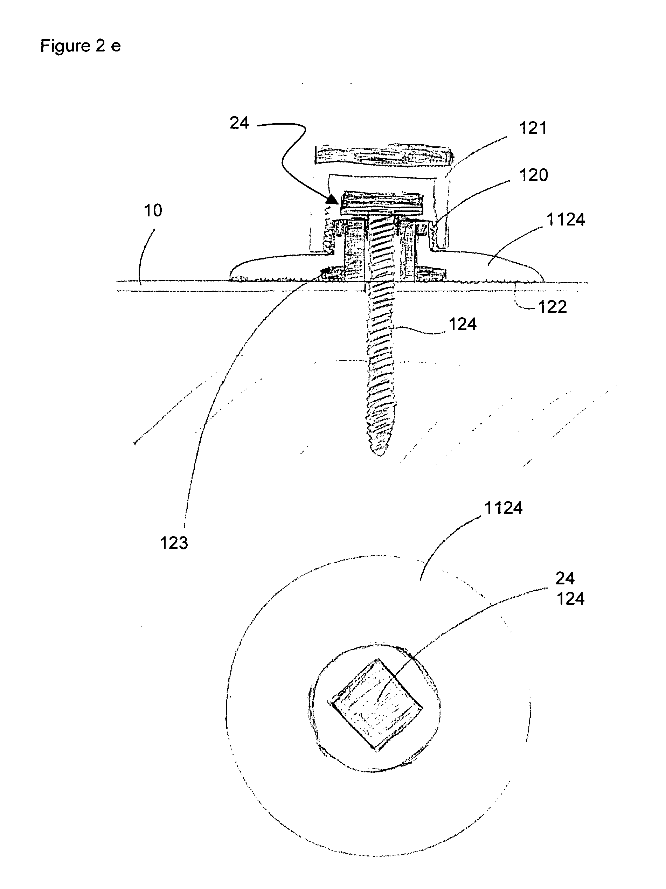

Figure 2e shows a mechanical fastener 124 which fastens a e.g. PVC disk (1124) welded to the membrane 10 with a seam sealer 122 to a roof substrate (e.g. concrete). A metal cup 121 (with butyl strip) is attached to the disk 1124 along the thread 120. The head 24 is designed to facilitate installation. The disk is reinforced with metal 123. Heavy PV modules may be attached to the cup 121. The cup 121 may be integrated with the fastener 124 and the thread 120 may be replaced by sealing rubber strips.

Figure 2f shows a cross section of a simple hollow profile with useful dimensions, all sizes are in cm. The hollow profile is equipped with an insert (like e.g a U-shaped aluminum profile (23)). The insert may also be a flexible aluminum sheet typically sized 1 mm x 20 cm x 3 m. In this variant plastic inserts, preferably cubes sized 20 mm x 20 mm x 20 mm, may be pulled into the inside of the profile to bring the aluminum sheet into place for fixing the modules. This variant is especially suited for curved roofs. The introduction of the cubes will be easier if the profile is adequately interrupted.

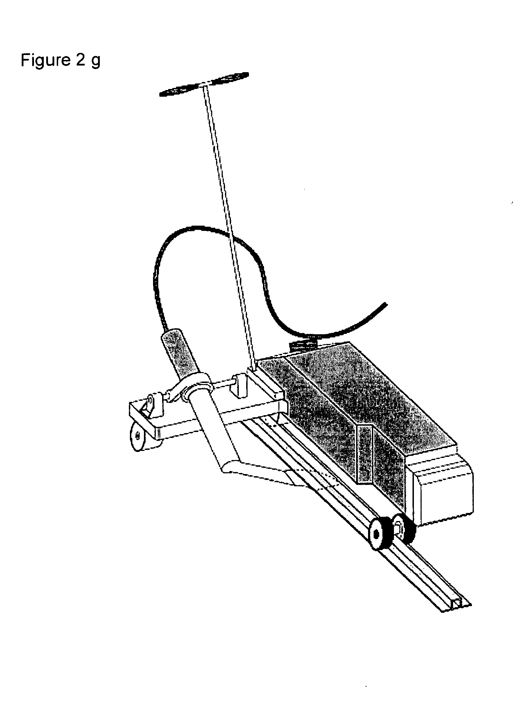

Figure 2g shows an adapted welding machine, welding a continuous profile 4 of this invention. The wheel is designed to push on (press) both flaps 31 of the profile 4 onto the underlaying sheet 10 (not shown) during the welding operation. In this case the profiles 4 are attached to the membrane 10 by welding the flaps 30.

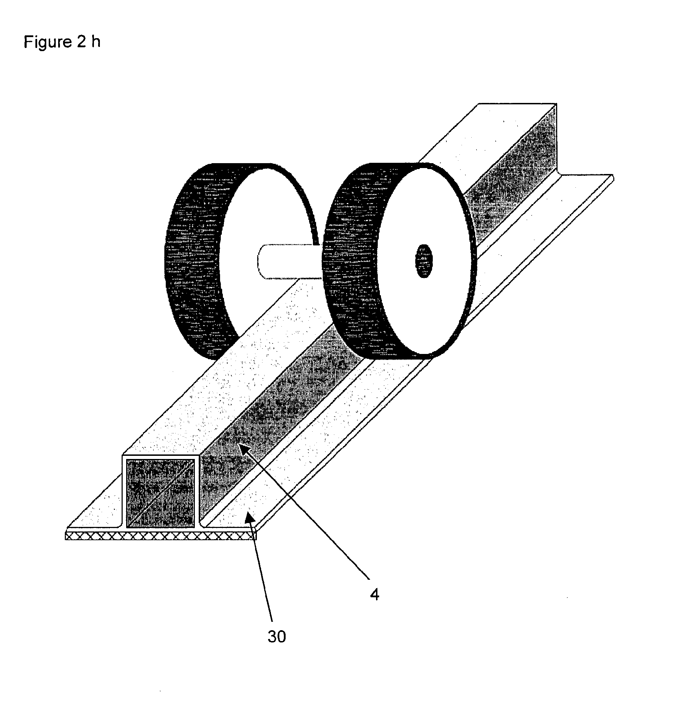

Figure 2h shows a detailed view of the wheel adapted to fit the profile 4.

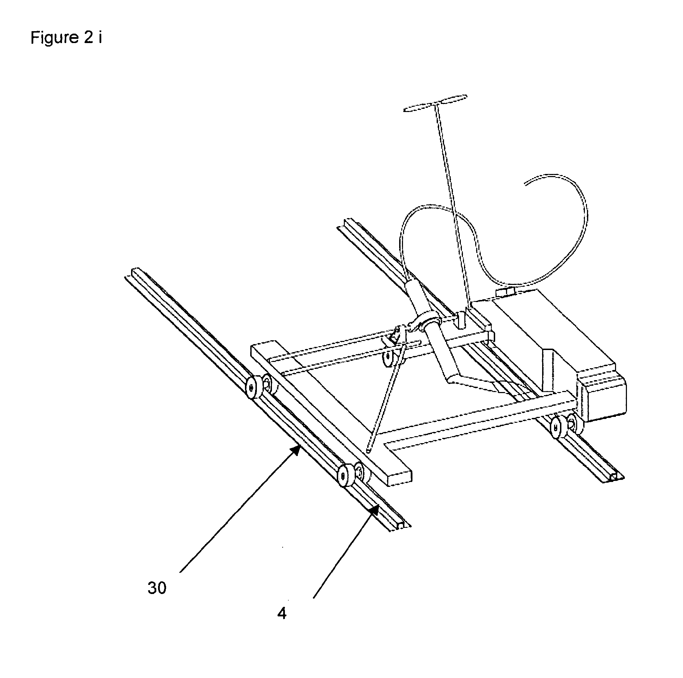

Figure 2i shows a device to weld the profiles 4 on a straight line and in an equal distance from each other. It is required to properly weld the profiles 4 on a straight line to be able to introduce the metal insert. The insert is in fact pulled and pushed inside the profile possibly while welding (several 2 m length inserts, attached to each other with a rope, may be used). This procedure helps to obtain well aligned and straight profiles 4. The distance between profiles 4 will match the width of the rigid panels 2 when the profiles 4 and rigid sheets 2 are installed along the same direction.

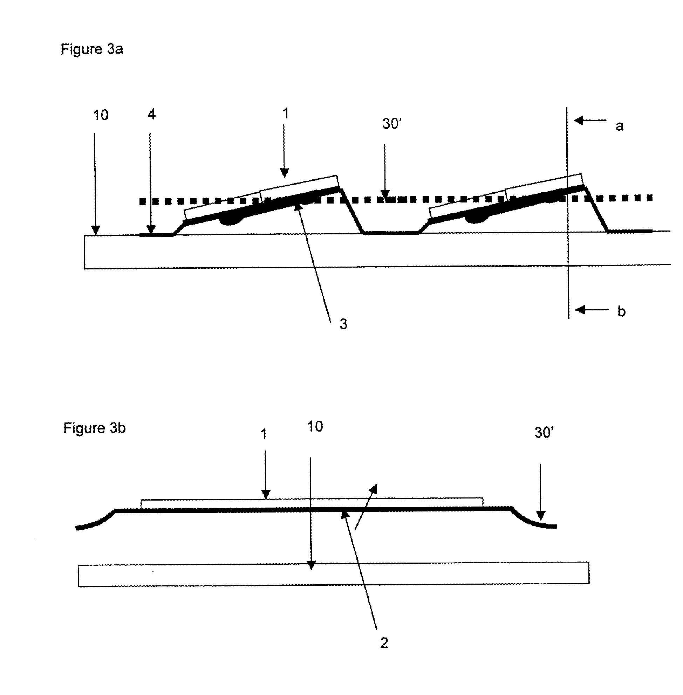

Figure 3a shows photovoltaic modules 1 attached to a rigid substrate 2 which has been molded (fiber reinforced plastic like PP or unsaturated PES or epoxy glass fiber composite). In this variant, the profiles 4 are attached to legs 14 being attached to or manufactured integrally with the sheet 2. The legs 14 are equipped with hooks, which are pressed onto loops of the profile 4 welded on the waterproofing membrane 10. It has to be noted that the full surface of the roof can be covered by the rigid sheet 2 and the loop fleece thereby protecting and extending the life of the waterproofing membrane 10.

Figure 3b shows the cross section along the line a-b in figure 3a. The rigid substrate 2 has flaps 30' extending to protect the electrical cables (not shown).

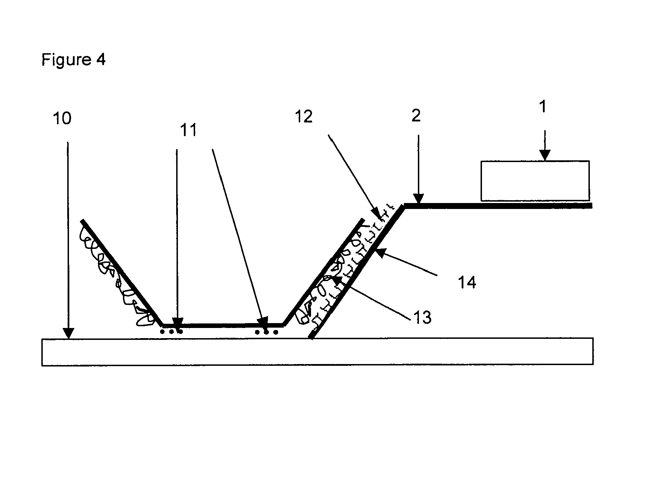

Figure 4 shows a detailed view of the legs of the modules 1 and rigid substrate 2 of figure 3. A hook sheet (mushroom) 12 is e.g. mechanically attached to the legs 14 of the rigid substrate 2 of the modules 1. A strip of sheet 4 forms the profile and is equipped with two loop fleeces 13. Profile 4 is fixed by welds 11 on the waterproofing membrane 10 and the loop 13 is pressed into the hook 12, thus fixing the modules 1 via their rigid substrate 2 to the roofing structure. The strip of sheet equipped with loop fleece 13 may be welded (11) on the waterproofing membrane 10 in the factory. The Hook or loop part may be protected with a release film, e.g. a self adhesive film, to ease installation (the release film prevents premature fastening and is peeled when the hook and loop are adjusted).

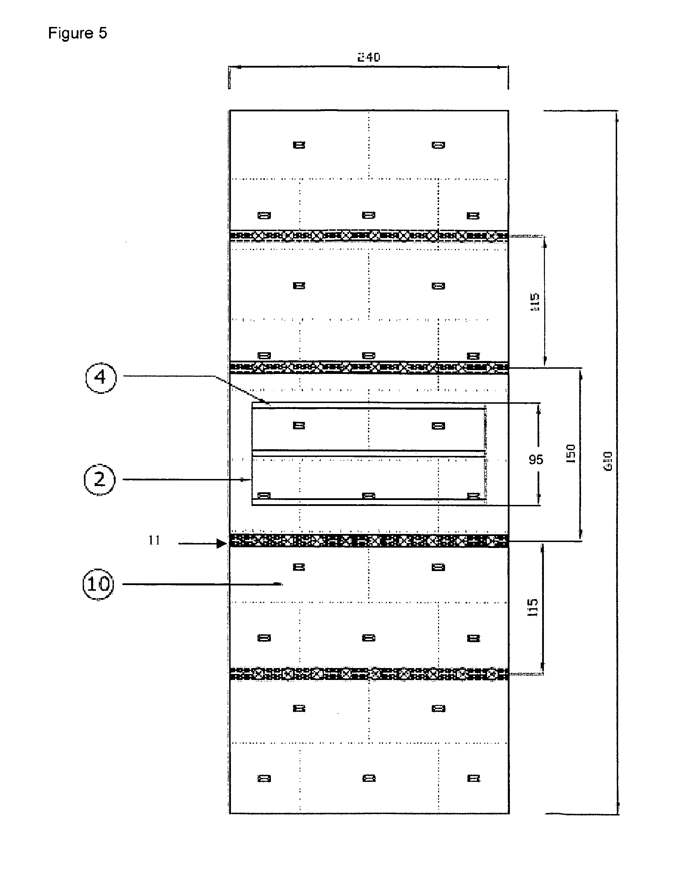

Figure 5 shows a drawing of a wind up-lift test (wind channel of 6.1 m * 2,4 m) performed according to ETAG 006. On a corrugated metal sheet with insulation panels (mechanically attached to the corrugated metal sheet), one installs the waterproofing membrane 10 (mechanically attached) as known by the man skilled in the art. Profiles 4 are welded on the waterproofing membrane 10. The metal sheet 2 is screwed on the profiles 4.

The several installation methods (profiles, parts, legs and hook and loop) may also advantageously be used in other cobonations than the ones described in detail. They provide an easy installation and protection against theft.

### Embodiments:

### Embodiment 1: fabrication of the sheet with loop strips of figure 4.

On a polyester reinforced P-PVC waterproofing membrane, one coats 500 g/m² of Plastisol and one laminates strips of loop fleece (e.g. PA VELCRO® Loop 3001 (13)) into the plastisol. After fusing the plastisol, one obtains a P-PVC sheet equipped with loops (13). A useful Hook (12) counter-part (attached on the legs) is the Gripfix XI mushroom fleece from Alfatex. A typical plastisol formulation is:
- Solvin 374MB: 100 phr
- DINP: 65 phr
- Ba/Zn stabilizer: 3 phr.
- Sb203: 5 phr
- Fungicide (e.g. Vinyzene IT 4000): 4 phr
- TiO₂ Kronos 2220: 15 phr

A typical process to coat a fleece loop (e.g. VELCRO® Loop 3001) is described in "PVC pour pâtes, Solvin p. 32;Br 1805a - B - 1 - 0904". The reinforced sheet is coated with 500 g/m² of plastisol. The fleece is pressed into this plastisol layer. The product is fused at typically 190°C during 2 minutes. To improve the adhesion of the plastisol to the PA fleece (polyamide), the plastisol layer in contact with the fleece may contain isocyanates as adhesion promoters. Alternativaly, one can stitch e.g. with PTFE threads, the strips of loops to the waterproofing membrane.

### Embodiment 2: photovoltaic modules and improvement of wind resistance

### Embodiment 2.1:

For the production of modules 1 according to this invention two photovoltaic cells (2 * 0,4 m * 5,4 m) are produced (and transferred) onto two plastic films (PEN), e.g. as described in WO 98/13882. The PEN film is called the (plastic) cell substrate. The two PEN films (0,4 m *5,4 m), with their photovoltaic active layers, are encapsulated in a vacuum laminator according to a procedure well known in the art. The PEN films are laid in parallel in the vacuum laminator with 5 cm between them. The encapsulating layers are 5 cm wider and longer at each edge than the two PEN films and cells. These layers have therefore a length of 5,5 m and a width of 0,95 m (0,05 m + 0,4 m + 0,05 m + 0,4 m + 0,05 m). The metal plate has also a size of 0,95 m * 5,5 m and may be slightly corrugated in the zones without PEN films (without cell). The screws are drilled into the plate in the 5 cm cell free zones and to the profiles with insert as shown on figure 1 a (5 cm cell free zones (5)).

The encapsulated module 1 produced by vacuum lamination comprises the following stack of layers:
a) An ETFE film 50 µm from DuPont (with surface treatment to adhere to EVA)
b) Two EVA Vistasolar 486.10 films of +/- 460 µm
c) A 50 µm PEN film, supporting the active layers (e.g. TCO/pin/back electrode/adhesion layer/adhesive to PEN)
d) A coextruded multi-layer film:
   - 50 µm Primacor 1410
   - 900 µm Exact 0203
   - 50 µm Primacor 1410 each layer containing anti-oxidants (0,3 % Irganox B225 form Ciba), HALS (0,2 % Tinuvin 770 and 0,4 % Chimassorb 944), UV absorbers (0,3 % Chimassorb 90), pigments (5 % TiO₂ Kronos 2220), 24 % Saytex 8010 and 8 % of Sb₂O₃.
e) A 1 mm steel sheet AluZink ® AZ185 as supplied by Mittal steel, epoxy coated and with a suitable primer to adhere to the layer d).

The rear face (looking to the roof) is painted with a PVDF paint. Electrical connections are done as known per se. In order to improve adhesion between layers, as will be recognized by the person skilled in the art, the several layers may be treated by several surface techniques: Corona, Flame treatment, Atmospheric plasma activation, Atmospheric of low pressure plasma deposition (aerosol assisted, ...) and/or polymerization, Sputtering. Suppliers: Plato Plasma Technology and surface, Vito, AcXys, Dow Corning Plasma Solution, AS Coating Star atmospheric plasma, Plasmatreat, .... The techniques may be combined.

In field testing: The modules 1, but without the photovoltaic active layer, are installed in accordance with this invention (figure 1 a) on a waterproofing membrane (10) equipped with 3 profiles (4). Stainless steel screws are used (1 per 15 cm) with butyl strips (figure 2a). The distance between the waterproofing membrane (10) and the metal plate (2) allowing for ventilation is 4 cm. The profiles are 5,5 m long and interrupted every 56 cm on 40 cm, allowing for excellent ventilation (optional depending on climate). It is expected that the stabilized production of electricity of the photovoltaic module will be nearly not affected by storms, pollution, rain, ... thanks to the low deformability (high E modulus) of the rigid metal substrate 2. The maximum temperature which is reached inside the module is 82°C (measured at the layer d).

The wind up-lift resistance of the system is tested according to ETAg 006. As shown on figure 5, a 1,2 mm Alkorplan F® 35176 waterproofing membrane (10) is mechanically fastened (11) as well known in the art, on a steeldeck "106/250/3" (0,75 mm thick and 106 mm high) with Etanco EHB DF fasteners (diameter = 0,48 mm - 120 mm long) and Etanco 40 * 82 mm²" plates. The 100 mm thick Rockwool Taurox insulation panels are fastened with the same fasteners. Three profiles (4) as described in figure 2e are welded on the waterproofing sheet (10) and equipped internally with an aluminum U profile (1 mm thick) as shown on figure 2e. The module 1 (see 2 on figure 5), but with a length of 2 m and without the active layer, is attached on the three profiles (4) with stainless steel screws (1 screw / 15 cm). The wind up-lift test is performed according ETAG 006 up to 4500 Pa underpressure (Q _{100%}). The waterproofing membrane is torn at its fasteners but the module 1 (see 2 on figure 5) is not visually damaged (no significant strain of the PEN film).

### Comparison 2.2:

Production of Modules 2 according to previous art: DE 298 24 045 U1: A photovoltaic cell (0,8 m * 5,4 m) is produced according e.g. WO 98/13882 and transferred onto a plastic film (PEN), cell substrate. For the purpose of wind testing, this PEN film without the active photovoltaic layers, is encapsulated in a vacuum laminator according to a procedure well known in the art. The encapsulating layers have a size of 5,5 m length and 0,9 m width to obtain 5cm cell free encapsulated zones around the cell. The encapsulated module 2 is produced by vacuum lamination as known per se and comprises the following stack of layers:
a) An ETFE film 50 µm from DuPont (with surface treatment to adhere to EVA)
b) Two EVA Vistasolar 486.10 films of +/- 460 µm
c) A 50 µm PEN film (normally supporting the active layers (TCO/pin/back electrode/adhesion layer/adhesive to PEN))
d) An EVA Vistasolar 486.10 film of +/- 460 µm.
e) A 1.2 mm PVC-Elvaloy 742 sheet (PVC K71: 100 phr; Elvaloy 742 ®: 85 phr; DiDP: 10 phr; Ca/Zn stabilizer and lubricants: 5 phr; Talcum: 10 phr; TiO₂ Kronos 2220: 10 phr).

The PVC-Elvaloy 742 ® sheet is 10 cm longer (5 cm at each end) and is wider than the other layers a) to d). At the side of the mechanical fasteners, the PVC-Elvaloy 742 ® sheet is 20 cm wider, and 15 cm at the other side. Electrical connections are done as known per se. In order to improve adhesion between layers the several layers may be treated by several surface techniques. Layer e) may also be laminated in a membrane press to layer d) in a second production step.

In field testing: The modules 2 are installed in accordance with DE 29824045 U1, with mechanical fasteners (see embodiment 2.1: installation similar as the installation of the 1,2 mm Alkorplan F® 35176 waterproofing membrane). The photovoltaic membranes are first stored one night on the field. The photovoltaic roofing membranes are then mechanically fastened at one side of the photovoltaic membrane.and then welded together at their overlaps (11). It appears very difficult to install the membranes without formation of creases. It is expected that the production of electricity of the photovoltaic modules 2 after storms, pollution, rain, people stepping on the modules, creases ... should be dramatically reduced. It will be very difficult to define who is responsible for the loss of electricity production. The maximum achieved temperature inside the module is 88°C (measured at the layer d).

In the wind up-lift resistance test according to ETAg 006, the photovoltaic membrane is visually deformed (at least 10 times more than the metal sheet 2 - see module 1), with a significant strain of the PEN film (a few percents) and consequentially risk of damage of the cells.

### Embodiment 2.3:

Production of Modules 3 according to this invention: Two peel and stick Uni-Solar PVL 136 modules are laminated on a 1 mm AluZink ® metal sheet PVDF pre-painted with pressing rolls and installed on profiles as explained in embodiment 2.1. The stabilized production of electricity of the photovoltaic modules (Uni-Solar PVL 136) should be nearly not affected by storms, pollution, rain, ... a.o. thanks to the low deformability (high E modulus) of the rigid substrate (2). The maximum temperature reached inside the module is 82°C (measured between the metal sheet and the Uni-Solar PVL 136).

### Comparison 2.4:

Production of Modules 4 according to previous art: DE 29824045 U1: Two Uni-Solar PVL 136 modules are laminated on the PVC-Elvaloy 742 ® sheet of example 2.2. with pressing rolls. The photovoltaic sheet is installed as in example 2.2. Creases are very difficult to avoid during installation. The production of electricity of the photovoltaic modules 4 after storms, pollution, rain, people stepping on the modules ... should be still satisfactory but the maximum achieved temperature inside the module is 88°C (measured between the PVC-Elvaloy 742 ® sheet and the Uni-Solar PVL 136). This temperature is not acceptable for self-adhesives (type Sika-Lastomer-R 68 of the Uni-Solar PVL 136 modules). Waves are observed in the photovoltaic sheet, together with debonding of the Uni-Solar PVL 136 module from the PVC-Elvaloy 742 ® sheet. It is very difficult to define who is responsible for the debonding of the Uni-Solar PVL 136 module from the PVC-Elvaloy 742 ® sheet (possible faults are among others initial adhesion, excessive temperature, creases at the installation and after installation, etc.... which is very bad with respect to warranty)

Further, it is well known that a higher temperature of exposition to weathering affects negatively the durability. Therefore, it should be expected that the durability of a photovoltaic module (photovoltaic membrane) directly installed onto an insulation panel will have a lower durability than a photovoltaic module glued on a ventilated metallic sheet as in this invention. The literature demonstrates surprisingly high influence. In outdoor durability of PVC-Plastisols - Journal of Coatings Technology Vol 61, N° 779, December 1989, G. Inge Bäck reports a 60 % increase of durability of uninsulated panels compared to insulated panels. The durability limiting factor of the Uni-Solar PVL 136 modules (like for the modules 2.1 and 2.2) is that the EVA upper adhesive (layer b) gets brown during aging and looses transparency. At the end, the ETFE will delaminate from the degraded EVA layer leading to total module failure. As the mechanism of degradation of PVC (formation of conjugated double bonds) and of EVA are relatively close, it should be reasonably expected that the lower temperature of modules achieved thanks to this invention means at least a 20 % higher durability. WO 99/27588 describes the impact of aging temperature on the browning of EVA films. While the evolution of color of the EVA films is hardly or not observed at 44 °C, it is very marked at 85°C

### Embodiment 3: improvement of reaction to fire

Modules 1 and modules 2 each without their photoactive layers are tested according to ENV 1187/1. The modules 1 are mounted on profiles as defined. These modules pass the ENV 1187/1 requirement at 15° and 45°. The quality of the waterproofing membrane and substrate is not important as the metal sheet acts as fire barrier. The modules 2 are installed on mineral wool insulation boards as defined in embodiment 2.2. These modules fail in the test ENV 1187/1 (15°).

To further evaluate (comparative tests) fire performance, modules according to this invention, without the photoelectric layers, are placed in a frame (30 * 30 cm²) at an angle of 45° against the horizon and submitted during 2 minutes to a gaz burner flame (760°C +/- 40 °C). The upper side of the modules (i.e. the side normally exposed to the sun) is looking to the flame. The time until the modules are estinguished (self-estinguishing time) and the damaged surface area are observed. The following module constructions have been assessed (variations of embodiment 2.1) versus a well-known conctruction (M4), equivalent to the Kalzip ® AluPlusSolar product approved for pitched roofs with slopes up to 60°:

| layer | Module M1 | Module M2 | Module M3 | Module M4 (≡ AluPlusSolar) |
|---|---|---|---|---|
| a) | 50 µm ETFE | 50 µm ETFE | 50 µm ETFE | Uni-Solar PVL 136 (*) |
| b) | 660 µm EVA | 920 µm EVA | 920 µm EVA | - |
| c) | 50 µm PEN | 50 µm PEN | 50 µm PEN | - |
| d) | 200 µm EVA | 460 µm EVA | 1000 µm PE coextruded (**) | - |
| e) | 1 mm alu plate | 1 mm alu plate | 1 mm alu plate | 1 mm alu plate |
| Self-estinguished | 2 minutes | 7 minutes | 2 minutes | 11 minutes |
| Damaged surface | 8.000 mm² | 16.000 mm² | 3.500 mm² | 7.000 mm² |

| | | | | |
|---|---|---|---|---|
| (*): Peel and Stick module consisting of 50 µm ETFE / 500 µm transparent EVA with glass innerlayers / 120 µm stainlesss steal foil with active layers / back sheet (EVA/PET/EVA) / EPR adhesive. (**) same layer as layer d) in embodiment 2.1. | | | | |

The module M1 behaves at the same level or better as the reference module M4 (used today with success for metal roofs with slope up to 60°). This is surprising as the thickness of the EVA/PEN/EVA organic films above the metal sheet is more than 800 µm. The module M3 behaves even better than the reference module M4, although the thickness of EVA above the cell is more than 800 µm. Such module, mounted according to this invention, fulfill the requirements of the ENV 1187/1, even at 45° slope. The modules M2 are self-estinguishing and will fulfill the requirements of the ENV 1187/1 (15° slope).

## Claims

1. Profile for attaching light weight rigid photovoltaic modules (1) to a roofing structure (41) comprising a waterproofing membrane (10), wherein the profile (4) comprises a soft side (21) which is attachable to the waterproofing membrane (10) and a rigid side (20) and/or wherein the profiles (4) comprise a rigid insert (23) and the modules (1) are attached to the rigid side or insert of the profile (4).

2. Profile according to claim 1 wherein the profile (4) is attached to the membrane (10) by welding, glueing or hook and loop fasteners, preferably by welding.

3. Profile according to claim 1 or 2 wherein the modules (1) are attached with mechanical fixing means, preferably screws, most preferred self drilling screws, to the profile (4).

4. Profile according to claim 1, 2 or 3 wherein the profiles (4) have a hook and loop fastening system for attaching to the membrane without perforating the waterproofing membrane (10), and the profile (4) allowing to clip a fastener to attach a photovoltaic module (1) with a rigid substrate (2) to it.

5. Profile according to anyone of claims 1 to 4 wherein the profile (4) has a production foamed core or a core partly filled with foam to seal the profile after installation.

6. Profile according to anyone of claims 1 to 5 wherein the profile (4) has flaps (30) for attaching and/or sealing to the waterproofing membrane (10).

7. Profile according to anyone of claims 1 to 6 wherein the profile (4) has a non-uniform height along its length with the rigid side or upper part being omitted except at those areas where the modules (1) are attached.

8. Profile according claim 1 wherein the profiles (4) are mechanically fixed to the roof structure thereby attaching the waterproofing membrane (10) and the profiles (4) are waterproof and sealed to the membrane (10).

9. Photovoltaic modules with good fire resistance, wind resistance, and durability consisting of one or more light weight photovoltaic module(s) (1), laminated on a rigid sheet (2) made of metal or of reinforced plastic.

10. Photovoltaic modules according to claim 9 wherein the rigid sheet (2) is a glass reinforced plastic sheet.

11. Photovoltaic modules according to claim 9 or 10 wherein the electrical connections (3) are done under the rigid sheet (2).

12. Photovoltaic modules according to any one of claims 9 to 11 wherein the modules are laminated on the rigid sheet (2) with a creep resistant adhesive (cross-linked EVA, PUR Hot-melt, etc.).

13. Photovoltaic modules according to any one of claims 9 to 12 wherein the light weight module(s) (1) are laminated on the rigid sheet (2) in the vacuum encapsulation step of production of the light weight module (1).

14. Photovoltaic modules according to any one of claims 9 to 13 wherein the light weight modules (1) contain one or more halogenated, preferably a brominated flame retarded adhesive layer(s) under a plastic cell substrate.

15. Photovoltaic modules according to any one of claims 9 to 14 wherein the layers above the photoactive layer do not contain glass fillers

16. Photovoltaic modules according to any one of claims 9 to 15 wherein UV protection is achieved by a coating containing nano particles.

17. Method to attach photovoltaic modules with a rigid sheet (2) to a roof structure comprising the steps of:
- providing profiles (4),
- fixing the profiles (4) on roof structure
- attaching the modules with the rigid sheet (2) to the profiles (4).

18. Method according to claim 17, wherein the roof structure is a waterproofing membrane (10) and the profiles (4) have a soft side (21) which is weldable to the waterproofing membrane (10) and the profiles (4) have a rigid side (20) and/or wherein the profiles (4) comprise a rigid insert (23) and the rigid sheet (2) is mechanically attached to the rigid side or insert with screws, nails, bolts or other fixing means.

19. Method according to claim 17 wherein the profiles take the form of strips and legs (14) being a part of the modules are provided and the legs (14) are equipped with one part of a hook and loop fastener attachable to a corresponding part of the hook and loop fastener fixed on the profile (4) attached to the roofing structure.

20. Method according to anyone of claims 17 to 19 wherein the profiles (4) allow to clip a fastener to attach a photovoltaic module (1) with a rigid substrate (2) to it.

21. Method according to anyone of claims 17 to 20 wherein the profiles (4) and/or modules (1) have flaps for sealing with the roofing structure.

22. Method according to anyone of claims 17 to 21 wherein the profiles (4) have flaps for attaching, preferably welding, to the roofing structure.

23. Use of profiles according to anyone of claims 1 to 8 for attaching the waterproofing membrane to the roof.

24. System for attaching photovoltaic modules according to anyone of claims 9 to 16 to a roof structure comprising profiles (4) attachable to the roof structure and areas (5) of the rigid sheet (2) for attaching the modules (1) to the profiles (4).

25. System according to claim 24 wherein the roof structure is a waterprofing sheet (19) and the profiles (4) are weldable to the waterprofing sheet (10).

26. System according to claim 24 or 25 wherein the profiles take the form of strips and legs (14) are an integral part of the rigid sheet (2) of the module (1) and are used to attach the modules to the profiles.

27. System according to the previous claim wherein the profile in the form of a strip is attached to the membrane before installation of the membrane, i.e. at the factory.

28. System according to anyone of claims 24 to 27 wherein the profiles (4) are attached to the roof strucutre with a hook and loop fastener.

29. System according to anyone of claims 24 to 28 wherein thermal solar elements are provided beneath the photovoltaic modules (1) in between the profiles (4) in intimate contact with the rigid substrate sheet (2) of the modules (1).

30. System according to anyone of claims 24 to 29 wherein the temperature within the modules is controlled to not higher than 85 °C by providing ventilation space underneath the modules between the profiles.
